# EUROPEAN PATENT APPLICATION

(11) **EP 4 787 589 A1**
(43) Date of publication of application: **05.08.2026**
(21) Application number: 25155001.8
(22) Date of filing: 30.01.2025
(51) Int. Cl.: H01M 50/358, H01M 50/342, H01M 50/308, H01M 50/209, H01M 50/249, F16K 17/00

(54) **BATTERY ARRAY VENTING SYSTEM**

(71) Applicant: Ford Global Technologies, LLC, Dearborn, MI 48126 (US)
(72) Inventor: COX, David, London, SE16 5XJ (GB); PETRIDIS, Themi, Bishop's Stortford, CM23 3NG (GB); STOTHARD, Christopher, Billericay, CM11 2DR (GB); ETHERIDGE, Paul, Crowborough, TN6 2EA (GB)
(74) Representative: HG Law International LLP

(57) **Abstract**

The present disclosure provides a vent valve assembly (210) for a battery array (200). The vent valve assembly comprises a body which defines a fluid path (230) and a vent valve (240) arranged in the fluid path. The body is configured to be attached to an outer wall (205) of the battery array and aligned with an aperture (220) in the outer wall of the battery array. The vent valve is configured to allow passage of fluid from an interior of the battery array, by way of the aperture and the fluid path, to atmosphere. The vent valve assembly enables controlled venting of gases from the battery array while maintaining structural integrity of the battery pack.

## Description

### FIELD OF INVENTION

The present disclosure relates to battery array venting systems, and more particularly to a vent valve assembly, battery array assembly, battery pack, sidewall for a battery array, and vehicle incorporating venting arrangements for battery arrays.

### BACKGROUND

Battery arrays are commonly used in various applications, including electric vehicles, to provide high-voltage power sources. These arrays typically consist of multiple battery cells arranged in a compact configuration to maximize energy density. As battery technology has advanced, the energy density and power output of battery arrays have increased significantly, allowing for improved performance in electric vehicles and other applications.

In battery arrays, each individual cell contains reactive materials that can potentially release heat and gases under certain conditions. In a thermal runaway event, a cell may vent hot gases. Such an event can potentially propagate to neighboring cells, leading to a cascading thermal event throughout the battery array.

Conventional battery array designs often incorporate venting systems to mitigate thermal runaway by directing gases from individual cells to the exterior of the battery pack. However, it is challenging to direct these gases to the exterior of the battery pack without flowing over other cells and components before reaching external venting ports. Additionally, many existing venting arrangements require significant modifications to the battery array structure or individual cell designs. This can increase manufacturing complexity, as well as potentially reducing the energy density of the overall battery pack. In addition, venting should be effective whilst maintaining the structural integrity and crash protection of the battery enclosure.

### SUMMARY OF INVENTION

This Summary is provided to introduce a selection of concepts in a simplified form that are further described below in the Detailed Description.

In a first aspect, a vent valve assembly for a battery array is provided. The vent valve assembly includes a body which defines a fluid path and a vent valve arranged in the fluid path, wherein the body is configured to be attached to an outer wall of the battery array and aligned with an aperture in the outer wall of the battery array, and the vent valve is configured to allow passage of fluid from an interior of the battery array, by way of the aperture and the fluid path, to atmosphere.

This vent valve assembly configuration allows for direct venting of exhaust gases from the battery array to the atmosphere, enhancing the thermal management of the battery pack.

The vent valve may be a pressure relief valve.

Using a pressure relief valve ensures that the vent only opens when a predetermined pressure is reached, maintaining the integrity of the battery array under normal operating conditions.

The vent valve may be a one-way valve.

A one-way valve prevents the ingress of external contaminants into the battery array while allowing the release of internal gases when necessary.

The vent valve may be a pop-off valve.

A pop valve or pop-off valve provides rapid release of pressure when a threshold is reached, offering quick response to potential overpressure situations within the battery array.

The vent valve may include a frangible portion.

Including a frangible portion allows for a fail-safe mechanism that ruptures under extreme pressure conditions, ensuring venting even if the primary valve mechanism fails.

The vent valve assembly may be attached to an outer wall of a battery pack.

Attaching the vent valve assembly to the outer wall of the battery pack provides a direct path for venting gases to the exterior of the entire battery system.

The vent valve assembly may be configured to direct fluid, via the vent valve, into the outer wall of a battery pack.

Directing the fluid into the outer wall of the battery pack allows for additional cooling or containment measures to be implemented within the wall structure.

The vent valve assembly may be formed as part of an outer wall of a battery pack.

Forming the vent valve assembly as part of the outer wall reduces the number of separate components and potential leak points in the battery pack design.

The vent valve assembly may be configured to direct fluid, via the vent valve, through an outer wall of a battery pack.

Directing fluid through the outer wall of the battery pack provides a straightforward path for venting gases directly to the exterior environment.

In a second aspect, a battery array assembly is provided. The battery array assembly comprises a battery array and the vent valve arrangement of the first aspect, wherein the battery array comprises an aperture in an outer wall thereof, and the vent valve arrangement is attached to the battery array such that the fluid path is in alignment with the aperture in the outer wall of the battery array.

This integrated design ensures proper alignment between the battery array's venting aperture and the vent valve assembly, maximizing venting efficiency.

In a third aspect, a battery pack is provided. The battery pack comprises at least one battery array assembly according to the second aspect.

Incorporating the battery array assembly with the integrated vent valve arrangement into a battery pack enhances the overall safety and venting capabilities of the entire battery system.

In a fourth aspect, a sidewall for a battery array is provided. The sidewall comprises a vent valve assembly according to the first aspect.

Integrating the vent valve assembly into the sidewall of the battery array provides a compact and efficient venting solution.

The sidewall for a battery array may comprise two or more vent valve assemblies according to the first aspect.

Including multiple vent valve assemblies in the sidewall increases the venting capacity and provides redundancy.

Each vent valve assembly may be configured to direct fluid, via a respective vent valve, into the sidewall.

Directing fluid into the sidewall allows for potential heat dissipation or containment features to be incorporated within the sidewall structure.

In a fifth aspect, a vehicle is provided. The vehicle comprises the battery array assembly of the second aspect or the battery pack of the third aspect.

Incorporating the battery array assembly or battery pack with the integrated vent valve arrangement into a vehicle enhances the performance of electric vehicles by providing efficient and controlled venting of battery gases.

### BRIEF DESCRIPTION OF FIGURES

Embodiments of the invention will be described, by way of example, with reference to the following drawings, in which:
FIG. 1 illustrates an orthogonal view of a battery array assembly, according to aspects of the present disclosure.
FIGS. 2A-2B illustrate orthogonal front views of a battery array and a vent valve assembly, according to aspects of the present disclosure.
FIG. 3 illustrates a side view of a battery pack, according to aspects of the present disclosure.
FIG. 4 illustrates a front orthogonal view of a battery pack, according to aspects of the present disclosure.
FIG. 5 illustrates a view of a battery pack with recessed vent valve assemblies, according to aspects of the present disclosure.
FIG. 6 illustrates a side view outline of a vehicle with a battery pack, according to aspects of the present disclosure.

Common reference numerals are used throughout the figures to indicate similar features.

### DETAILED DESCRIPTION

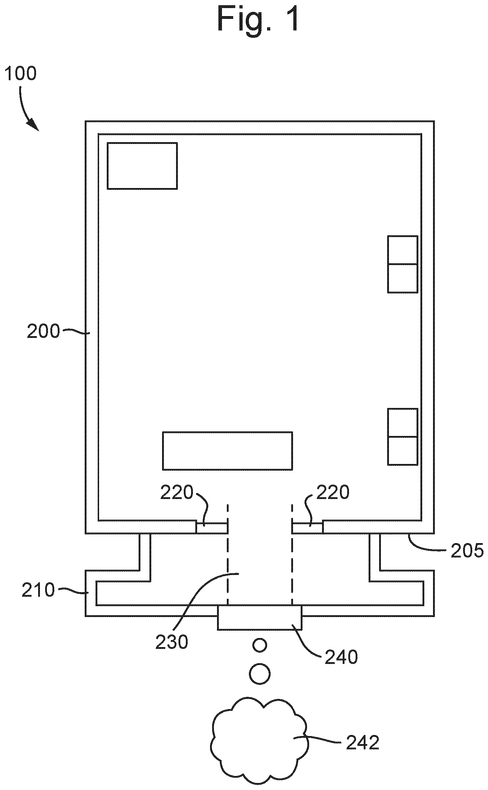

A battery array assembly 100 is illustrated in FIG. 1. The battery array assembly 100 comprises a battery array 200 enclosed by an outer wall of the battery array 205. The battery array 200 is designed with a single vent path out of the battery array 200.

The battery array assembly 100 includes an aperture and attachment arrangement 220 positioned at the bottom of the battery array 200. A fluid path 230 extends, e.g., horizontally, from the aperture and attachment arrangement 220 across the bottom of the assembly. The fluid path 230 connects to a vent valve 240 located at the bottom right of the assembly.

The vent valve 240 is configured to allow passage of fluid from an interior of the battery array 200 to atmosphere. Below the vent valve 240, a gas flow output 242 is provided, representing the release of fluid or gas from the assembly.

The outer wall of the battery array 205 provides an enclosure around the battery array 200, creating a protective barrier for the internal components. The outer wall of the battery array 205 includes an aperture aligned with the aperture and attachment arrangement 220.

The battery array assembly 100 demonstrates a design that allows for controlled venting of fluids or gases through the aperture and attachment arrangement 220, along the fluid path 230, and out through the vent valve 240, as indicated by the gas flow output 242.

The battery array 200 may include low voltage (LV) and/or high voltage (HV) connectors, and be designed so that exhaust gas does not vent at, near or through these locations. Any venting inside the battery array 200 may be directed to the aperture and attachment arrangement 220 by internal design.

The vent valve 240 and fluid path 230 may be part of a vent valve assembly 210. The vent valve assembly 210 may comprise a body which defines the fluid path 230. The body may be configured to be attached to the outer wall of the battery array 205 and aligned with the aperture in the outer wall of the battery array 205.

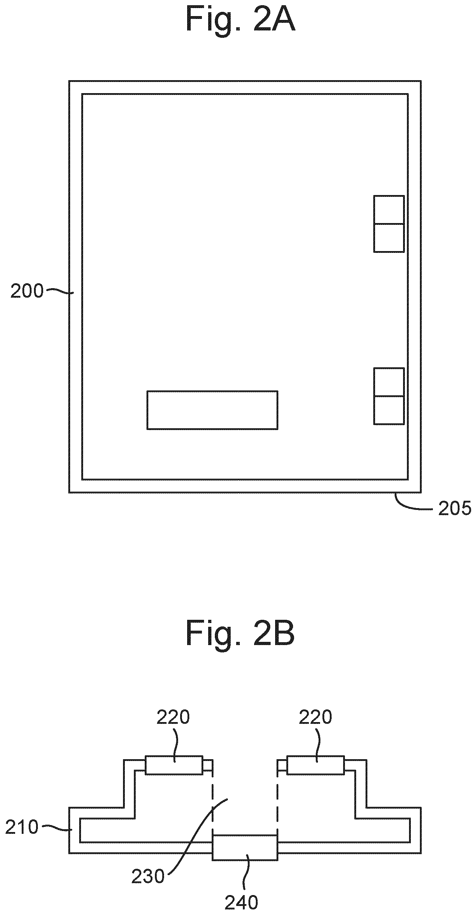

FIGS. 2A-2B illustrate a battery array 200 and a vent valve assembly 210 as separate components. The battery array 200 is enclosed by the outer wall of the battery array 205, which includes the aperture and attachment arrangement 220. The vent valve assembly 210 comprises a body which defines the fluid path 230 and includes the vent valve 240.

The vent valve assembly 210 is designed to be integrated with the battery array 200. The aperture and attachment arrangement 220 of the battery array 200 is configured to align with the fluid path 230 of the vent valve assembly 210 when the components are combined.

The vent valve 240 may be a one-way valve, allowing fluid to flow out of the battery array 200 while preventing external substances from entering. In some examples, the vent valve 240 is a pop valve, which may open rapidly when a certain pressure threshold is reached.

In certain configurations, the vent valve 240 includes a frangible portion. This frangible portion may be designed to rupture under specific pressure conditions, providing an additional safety mechanism.

The vent valve assembly 210 may be integrated into a metallic sub assembly or vent module. This integration can provide structural support and protection for the vent valve assembly 210.

In some examples, the vent valve 240 is a pressure relief valve. The pressure relief valve may be calibrated to open at a predetermined pressure, allowing for controlled release of excess pressure from the battery array 200.

The vent valve assembly 210 may be attached to the battery array 200 in various ways. In one configuration, the vent valve assembly 210 is bolted onto the battery array 200. This attachment method allows for secure integration while potentially enabling easier maintenance or replacement if needed.

Alternatively, the vent valve assembly 210 may be manufactured as part of the battery array chassis or casing. This integrated design can provide a seamless connection between the battery array 200 and the vent valve assembly 210, potentially enhancing the overall structural integrity of the battery array assembly 100.

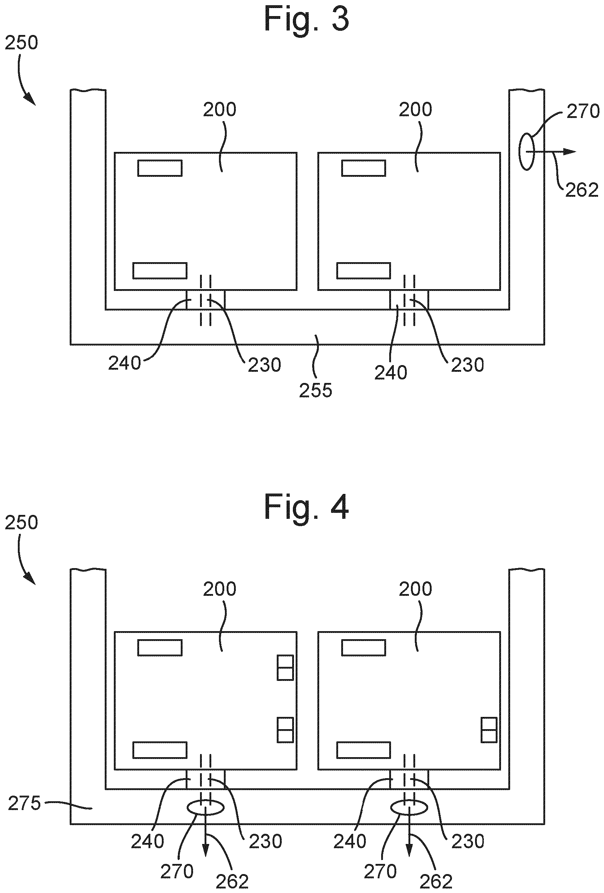

FIG. 3 illustrates a side view of a battery pack 250. The battery pack 250 comprises two battery arrays 200 positioned side by side within an outer wall 255.

At the bottom of each battery array 200, there is a vent valve 240. The vent valves 240 provide fluid paths 230. The fluid paths 230 enter the outer wall 255. The fluid paths 230 lead to a wall vent outlet 270 located in the outer wall 255. Gas flow 262 is shown passing out of the battery pack 250 through the wall vent outlet 270.

The outer wall 255 encloses the entire assembly, providing a protective barrier for the internal components. The outer wall 255 extends beyond the battery arrays 200 on both the left and right sides, creating a complete enclosure for the battery pack 250.

In some examples, the vent valve 240 is connected to the battery array 200 vent port by a duct made of temperature resistant material. The duct may be sealed to both the battery array 200 and the outer wall 255 of the battery pack 250.

In certain configurations, the battery pack 250 has only one wall vent outlet 270 at the rear of the battery pack 250. The gas flow 262 is channelled from the battery arrays 200 to the wall vent outlet 270 through the outer wall 255 of the battery pack 250.

The vent valve 240 may be configured to direct fluid into the outer wall 255 of the battery pack 250. In some examples, the vent valve 240 is formed as part of the outer wall 255 of the battery pack 250.

The arrangement of components in the battery pack 250 allows for a fluid communication pathway from the battery arrays 200 through the vent valves 240, along the fluid paths 230, to the wall vent outlet 270, and finally out through the gas flow 262. This design facilitates controlled venting of the battery arrays 200 to the exterior of the battery pack 250.

FIG. 4 illustrates a front orthogonal view of the battery pack 250. The battery pack 250 comprises two battery arrays 200 positioned side by side within a housing structure. Each battery array 200 is depicted as a rectangular unit with internal components visible.

At the bottom of each battery array 200, there is a vent valve 240. The vent valves 240 are connected to fluid paths 230, represented by horizontal lines extending from the vent valves 240 towards the outer edges of the battery pack 250.

Below each vent valve 240, there is a wall vent outlet 270. The wall vent outlets 270 are in fluid communication with the vent valves 240 and the fluid paths 230, and provide a pathway for the gas flow 262 to directly exit the battery pack 250. The gas flow 262 is illustrated by arrow-like shapes pointing downward from each wall vent outlet 270.

The battery pack 250 is enclosed by a sidewall 275. The sidewall 275 is shown as a vertical structure on either side of the battery arrays 200. The sidewall 275 extends beyond the height of the battery arrays 200, providing structural support and containment for the entire assembly.

In some examples, the sidewall 275 comprises two or more vent valve assemblies 210. The vent valve assemblies 210 may be configured to direct fluid, via a respective vent valve 240, into the sidewall 275. The gas flow 262 may be channelled via extrusions and/or a crash protection structure that run along the side of the battery pack 250.

The vent valve assemblies 210 may be constructed such that the vent valve assemblies 210 are strong enough to form part of the sidewall 275 of the battery pack 250. The vent valve assemblies 210 may be robust.

The arrangement of components in the battery pack 250 creates a ventilation system that allows for controlled release of gas from the battery arrays 200 through the vent valves 240, along the fluid paths 230, and out through the wall vent outlets 270 as gas flow 262.

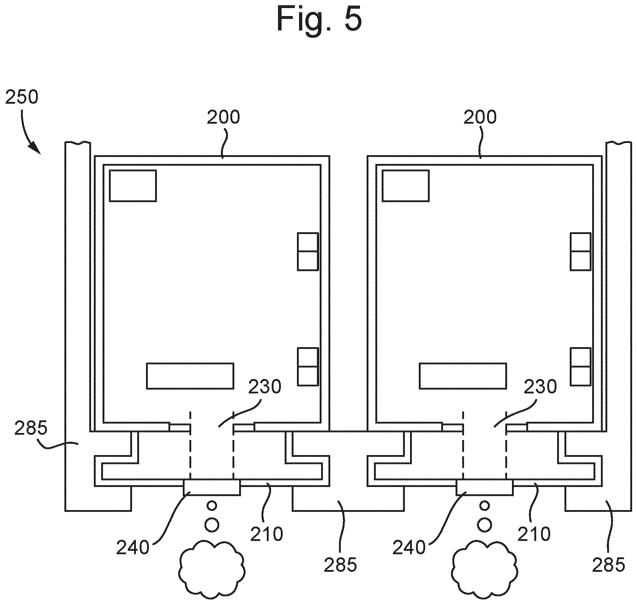

FIG. 5 illustrates a view of a battery pack 250. The battery pack 250 comprises two battery arrays 200 positioned side by side within a battery pack outer wall 285. At the bottom of each battery array 200, there is a vent valve assembly 210. The vent valve assemblies 210 provide fluid paths 230, represented by horizontal lines extending from the vent valve assemblies 210 towards the outer edges of the battery pack 250.

The vent valve assemblies 210 include vent valves 240, which are positioned below each battery array 200. The vent valves 240 are in fluid communication with the fluid paths 230, providing a pathway for gas to exit the battery arrays 200.

The vent valve assemblies 210 are configured to be recessed into the battery pack outer wall 285 of the battery pack 250. The vent valve assemblies 210 are shaped to fit into the battery pack outer wall 285, such that the vent valve assemblies 210 form part of the battery pack outer wall 285. This configuration allows the vent valve assemblies 210 to be integrated seamlessly into the structure of the battery pack 250.

The vent valve assemblies 210 are constructed to be robust and strong enough to serve as part of the battery pack outer wall 285. The vent valve assemblies 210 provide structural integrity to the battery pack outer wall 285.

In addition to their venting function, the vent valve assemblies 210 act as structural elements to protect the battery arrays 200. The robust construction of the vent valve assemblies 210 contributes to the overall structural strength of the battery pack 250, enhancing the performance of the battery arrays 200 in the event of an impact.

The battery pack outer wall 285 is shown as vertical structures on either side of the battery arrays 200. The battery pack outer wall 285 extends beyond the height of the battery arrays 200, providing structural support and containment for the entire assembly.

The arrangement of components in the battery pack 250 creates a ventilation system that allows for controlled release of gas from the battery arrays 200 through the vent valve assemblies 210, along the fluid paths 230, and out through the vent valves 240, while maintaining the structural integrity of the battery pack 250.

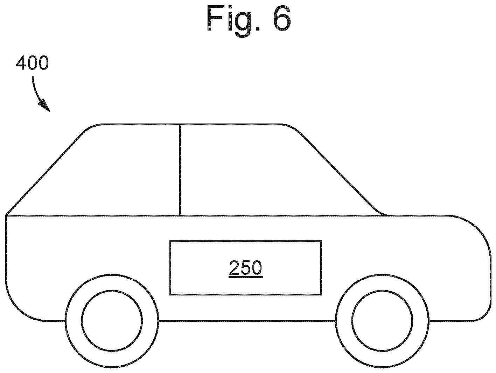

FIG. 6 illustrates a side view outline of a vehicle 400. The vehicle 400 includes a battery pack 250 positioned in the middle of the vehicle's body.

The battery pack 250 is integrated into the structure of the vehicle 400, providing a centralized power source for the vehicle's electrical systems. The positioning of the battery pack 250 in the middle of the vehicle 400 may contribute to weight distribution and overall vehicle balance.

In some examples, the vehicle 400 comprises a battery array assembly 100. The battery array assembly 100 may be part of the battery pack 250 integrated into the vehicle 400. The battery array assembly 100 includes a battery array 200 enclosed by the outer wall of the battery array 205, as described in previous sections.

The battery pack 250 integrated into the vehicle 400 may include multiple battery arrays 200, each equipped with a vent valve assembly 210. The vent valve assembly 210 includes a fluid path 230 and a vent valve 240, allowing for controlled venting of gases from the battery arrays 200.

The battery pack 250 within the vehicle 400 may be enclosed by the battery pack outer wall 285. The battery pack outer wall 285 may incorporate wall vent outlets 270 for directing gas flow 262 from the battery arrays 200 to the exterior of the vehicle 400.

The integration of the battery pack 250 into the vehicle 400 may take into account the ventilation system described in previous sections. This system allows for controlled release of gas from the battery arrays 200 through the vent valves 240, along the fluid paths 230, and out through the wall vent outlets 270 as gas flow 262.

The positioning and integration of the battery pack 250 in the vehicle 400 may consider factors such as impact protection and thermal management. The sidewalls 275 of the battery pack 250 may provide structural support and protection for the battery arrays 200 within the vehicle 400 structure.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein.

Aspects of any of the examples described above may be combined with aspects of any of the other examples described to form further examples without losing the effect sought.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1. A vent valve assembly for a battery array, the vent valve assembly comprising a body which defines a fluid path and a vent valve arranged in the fluid path, wherein:
the body is configured to be attached to an outer wall of the battery array and aligned with an aperture in the outer wall of the battery array; and
the vent valve is configured to allow passage of fluid from an interior of the battery array, by way of the aperture and the fluid path, to atmosphere.

2. The vent valve assembly of claim 1, wherein the vent valve is a pressure relief valve.

3. The vent valve assembly of claim 1, wherein the vent valve is a one-way valve.

4. The vent valve assembly of claim 1, wherein the vent valve is a pop-off valve.

5. The vent valve assembly of claim 1, wherein the vent valve includes a frangible portion.

6. The vent valve assembly of any preceding claim, wherein the vent valve assembly is attached to an outer wall of a battery pack.

7. The vent valve assembly of claim 6, wherein the vent valve assembly is configured to direct fluid, via the vent valve, into the outer wall of a battery pack.

8. The vent valve assembly of any one of claims 1-6, wherein the vent valve assembly is formed as part of an outer wall of a battery pack.

9. The vent valve assembly of any one of claims 1-6, wherein the vent valve assembly is configured to direct fluid, via the vent valve, through an outer wall of a battery pack.

10. A battery array assembly comprising a battery array and the vent valve arrangement of any one of claims 1-6, wherein the battery array comprises an aperture in an outer wall thereof, and the vent valve arrangement is attached to the battery array such that the fluid path is in alignment with the aperture in the outer wall of the battery array.

11. A battery pack comprising at least one battery array assembly according to claim 10.

12. A sidewall for a battery array comprising a vent valve assembly according to any one of claims 1-6.

13. The sidewall for a battery array of claim 12, comprising two or more vent valve assemblies according to any one of claims 1-6.

14. The sidewall for a battery array of claim 12 or claim 13, wherein the or each vent valve assembly is configured to direct fluid, via a respective vent valve, into the sidewall.

15. A vehicle comprising the battery array assembly of claim 10 or the battery pack of claim 11.
